# EUROPÄISCHE PATENTSCHRIFT

(11) **EP 2 289 337 B1**
(45) Veröffentlichungstag und Bekanntmachung des Hinweises auf die Patenterteilung: **21.10.2015**
(21) Anmeldenummer: 10173491.1
(22) Anmeldetag: 20.08.2010
(51) Int. Cl.: A21C 3/10, A21C 9/08

(54) **Liniensynchronisierung**
Line synchronisation
Synchronisation de lignes

(30) Priorität: 20.08.2009 DE 102009038208
(43) Veröffentlichungstag der Anmeldung: 02.03.2011
(73) Patentinhaber: VEMAG Maschinenbau GmbH, 27283 Verden/Aller (DE)
(72) Erfinder: Kiel, Tobias, 27283, Verden (DE); Meier, Dieter, 27308, Kirchlinteln-Holtum Geest (DE); Carstens, Christian, 27389, Stemmen (DE); Aldag, Uwe, 27383, Scheeßel (DE)
(74) Vertreter: Eisenführ Speiser

(56) Entgegenhaltungen:
- EP-A1- 0 453 248
- US-A- 3 676 032
- US-A- 4 900 241

## Beschreibung

Die vorliegende Erfindung bezieht sich auf ein System zum Herstellen und Transportieren von Nahrungsmittelportionen, eine Füllmaschine zum kontinuierlichen Fördern eines Nahrungsmittelstranges und zur Verwendung in einem solchen System und ein Verfahren zum Herstellen und Transportieren von Nahrungsmittelportionen.

Nahrungsmittelportionen werden häufig wie folgt produziert: In einer Füllmaschine ist eine Nahrungsmittelmasse bevorratet, die von der Füllmaschine an eine Abschneidevorrichtung ausgegeben wird. Die Abschneidevorrichtung teilt den von der Füllmaschine ausgegebenen Nahrungsmittelstrang in einzelne Portionen und gibt diese Portionen an ein Transportband bzw. eine Transporteinrichtung weiter. Das Transportband befördert die Nahrungsmittelportion an eine Weiterverarbeitungsvorrichtung, die die Nahrungsmittelportion beispielsweise verpackt, umformt oder andere Arbeitsschritte an der Portion ausführt.

Unterschiedliche Ausgestaltungen im Zusammenwirken dieser Komponenten und/oder der Arbeitsweise der einzelnen Komponenten sind bekannt. So kann die Füllmaschine beispielsweise in einem Start- und Stopbetrieb arbeiten, d.h. die Füllmaschine startet die Ausgabe des Nahrungsmittelstranges in Antwort auf ein Portionsanforderungssignal und stoppt die Ausgabe des Nahrungsmittelstranges in Antwort auf das Ende des Portionsanforderungssignals. Eine solche Füllmaschine gibt beispielsweise ein Schneidesignal an die Abschneidevorrichtung aus, woraufhin die Abschneidevorrichtung am Portionsende den Nahrungsmittelstrang teilt. Eine solche Arbeitsweise wird als diskontinuierliches System bezeichnet, da die Füllmaschine ihren Betrieb gemäß dem Portionsanforderungssignal startet und stoppt.

Auch ist ein System bekannt, in welchem die Füllmaschine kontinuierlich den Nahrungsmittelstrang ausgibt, ohne ein Fülltempo zu ändern. Ein externes Portionsanforderungssignal wird von der Abschneidevorrichtung empfangen, welche in Antwort auf das Portionsanforderungssignale, welches gleichzeitig das Schneidesignal ist, den Nahrungsmittelstrang in einzelne Portionen teilt.

Ferner ist auch ein System bekannt, in welchem eine übergeordnete Steuerung für den Ablauf sorgt. Dabei gibt die übergeordnete Steuerung ein Fülltemposignal an die kontinuierlich arbeitende Füllmaschine und ein Schneidesignal an die Abschneidevorrichtung aus. Die übergeordnete Steuerung bestimmt somit gleichzeitig den Betrieb der Abschneidevorrichtung wie auch der Füllmaschine.

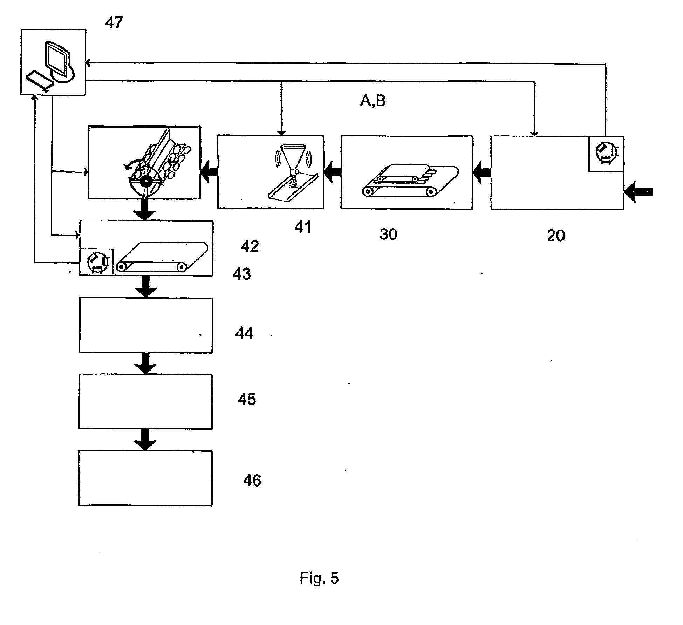

Ein beispielhaftes System mit einer übergeordneten Steuerung ist in Fig. 5 dargestellt. Das System 100 weist eine übergeordnete Steuerung 47 auf. Im Folgenden wird zunächst der Weg der Nahrungsmittelportionen beschrieben. Teigteiler bzw. Messer 20 wird ein Nahrungsmittelstrang, beispielsweise ein Teig oder eine Fleischmasse, zugeführt und in einzelne Portionen geteilt. Das Formband 30 nimmt die geteilten Teigstränge oder Teigportionen auf, formt diese und gibt sie an eine Rutschen- bzw. Bemehlungsvorrichtung 41 aus. Von der Rutschen- bzw. Bemehlungsvorrichtung 41 werden die Portionen an ein sogenanntes Rotary Gate 42 ausgegeben, welches die Portionen bzw. Teiglinge aufnimmt und an das Vorgärband 43 (Proofer) übergibt. Von dem Vorgärband 43 werden die Teiglinge auf ein Backblech 44 befördert und abgelegt. Von dem Backblech 44 werden die Teiglinge an Gärschrank 45 und anschließend an Ofen 46 abgegeben.

Als nächstes wird die Signalsteuerung durch die übergeordnete Steuerung 47 des Systems 100 der Figur 5 erläutert. Der Steuerung 47 werden Messdaten von der Teigteiler- bzw. Messereinheit 20 und dem Vorgärband 43 eingegeben. Auf Basis dieser eingegebenen Daten berechnet die Steuerung die Signale, die sie an Teigteiler bzw. Messereinheit 20 und Vorgärband 43 ebenso wie an das Rotary Gate 42 und die Rutschen- bzw. Bemehlungsvorrichtung 41 ausgibt.

In dem in Fig. 5 gezeigten Ausführungsbeispiel des Systems 100 erfolgt die Teigzuführung kontinuierlich. Das Portionsanforderungssignal entspricht somit dem Schneidesignal. In anderen Worten, die Portionsgröße wird durch den Abschneidetakt bestimmt, der von der Steuerung 47 an den Teigteiler bzw. das Messer 20 ausgegeben wird. Im Folgenden ist das Portionsanforderungssignal mit "A" und das Schneidesignal mit "B" bezeichnet. In dem Ausführungsbeispiel der Fig. 5 ist das Portionsanforderungssignal A das Abteil- bzw. Schneidesignal B.

Die bekannten Vorrichtungen weisen unterschiedliche Nachteile auf. Bei einem Portionieren einiger Produkte (z.B. bei Teig) entstehen höhere Gewichtsschwankungen, wenn für jede Portion beschleunigt und abgebremst wird, als wenn das Portionieren (z.B. per Schnitt) während des kontinuierlichen Förderns geschieht. Wenn allerdings kontinuierlich arbeitende Maschinen in einer Linie unbedingt den Zeitpunkt, wann Portionen erzeugt werden, vorgeben müssen, damit die Linie optimal arbeitet, ergibt sich daraus ein Widerspruch: Einerseits muss der Füller für eine genaue Portionierung mit möglichst konstanter Geschwindigkeit fördern, andererseits gibt die nachfolgende Linie vor, ob gerade 99 oder 101 Portionen pro Minute benötigt werden.

Aus US 4,900,241 A ist ein System und ein Verfahren zum Herstellen von Keksen mit einem Extruder gemäß den Oberbegriffen den Ansprüche 1 und 11 bekannt. Dem Auslass des Extruders ist eine Schneidvorrichtung zugeordnet, die Portionen von dem mittels des Extruders erzeugten Teigstranges abtrennt. Ferner weist die Maschine eine elektronische Steuerung auf, die einen Taktgeber umfasst, mit der die Taktung der zu erzeugenden Teigstücke bei gleichzeitiger Veränderung der Ausgabegeschwindigkeit des Teigstranges durch Erhöhen des Druckes veränderbar ist.

Wie bereits erläutert, sind Systeme bekannt, bei denen der Förderwerksantrieb für jede Portion per Signal gestartet wird, worauf der Antrieb die eingestellte Portionsgröße fördert und wieder stoppt. Das Trennen erfolgt am Portionsende. Ein solches System weist den Nachteil auf, dass der Start-Stop-Betrieb eine schlechtere Gewichtsgenauigkeit liefern kann.

Auch sind oben bereits Systeme erwähnt, die eine Geschwindigkeit aufweisen, bei der kontinuierlich gefördert werden kann, ohne das Tempo nachzuregeln. Das Trennen erfolgt zeit- oder signalgesteuert an der Abschneidevorrichtung. Solche Systeme weisen den Nachteil auf, dass die Portionierleistung der Linie während des Betriebes zum Beispiel aufgrund von Schwankungen im Stromnetz von 101 auf 99 Portionen pro Minute sinkt, was dazu führt, dass die Portionen entweder zu schwer sind oder die Produktion durch eine Störung unterbrochen wird.

Es ist Aufgabe der Erfindung, diese und weitere Nachteile der im Stand der Technik bekannten Systeme und Verfahren zum Herstellen und Transportieren von Nahrungsmittelportionen zu vermeiden.

Erfindungsgemäß wird ein System zum Herstellen und Transportieren von Nahrungsmittelportionen vorgeschlagen, welches aufweist: Eine Füllmaschine zum kontinuierlichen Fördern eines Nahrungsmittelstranges, eine Abteilvorrichtung zum Abteilen der Portionen aus dem geförderten Nahrungsmittelstrang, eine Transporteinrichtung zum Transportie-ren der Portionen an eine Weiterverarbeitungsvorrichtung, und eine Sensoreinheit zum Generieren eines Portionsanforderungssignals auf Basis einer Portionsanforderung der Weiterverarbeitungsvorrichtung und zum Ausgeben des Portionsanforderungssignals an die Füllmaschine, wobei die Füllmaschine ausgestaltet ist, um das kontinuierliche Fördern des Nahrungsmittelstranges unter Verwendung des Portionsanforderungssignals zu steuern. Durch das erfindungsgemäße System wird eine Liniensynchronisierung erreicht.

Ein Signal, welches von der nachfolgenden Linie, d.h. einer Weiterverarbeitungsvorrichtung, generiert wird, meldet der Füllmaschine, wann Portionen erzeugt werden sollen. Dieses Signal ist also ein Portionsanforderungssignal für die kontinuierlich betriebene Füllmaschine. Die Nachteile des diskontinuierlichen Betriebes der Füllmaschine wie Verschleiß und hoher Verbrauch werden so erfindungsgemäß vermieden. Auch können Schwankungen im Stromnetz und entsprechende Schwankungen von Portionen pro Minute ausgeglichen werden, da die Maschinen synchron laufen, d.h. da die Füllmaschine mit der Weiterverarbeitungsvorrichtung synchronisiert ist.

Bevorzugt ist die Füllmaschine ausgestaltet, um ein Abteilsignal unter Verwendung des Portionsanforderungssignals zu generieren und um das Abteilsignal an die Abteilvorrichtung auszugeben, wobei die Abteilvorrichtung ausgestaltet ist, um die Portionen unter Verwendung des Abteilsignals abzuteilen. Ein solches System bietet den Vorteil, dass die Liniensynchronisierung sich auch auf die Abteilvorrichtung erstreckt. Dadurch, dass die Abteilvorrichtung synchron zu der Füllmaschine betrieben wird, wird vorteilhaft erreicht, dass die Portionen eine möglichst genaue Größe bzw. Gewicht aufweisen und Schwankungen in Portionsgröße bzw. Gewicht verringert bzw. verhindert werden können.

Bevorzugt ist das Portionsanforderungssignal und/oder Abteilsignal ein Taktsignal. Ein Taktsignal im Sinne dieser Beschreibung ist ein Signal, welches eine Frequenz aufweist, die den Arbeitszyklus der Füllmaschine und/oder der Abteilvorrichtung bestimmt. Bevorzugt ist ein Taktsignal ein Rechtecksignal, welches insbesondere einen logischen "1"- und einen logischen "0" Wert aufweist. Im Sinne dieser Beschreibung kann unter dem "Taktsignal" auch ein Dreieckssignal, Sägezahnsignal oder anderes Signal verstanden werden, welches geeignet ist, den Arbeitszyklus der Füllmaschine und/oder Abteilvorrichtung zu bestimmen.

Bevorzugt repräsentiert ein Takt des Taktsignals die Anforderung und/oder Abteilung einer Portion. Bevorzugt repräsentiert ein Takt des Taktsignals die Anforderung und/oder Abteilung von zwei Portionen. Bevorzugt repräsentieren zwei Takte des Taktsignals die Anforderung und/oder Abteilung einer Portion. Jedwede andere Kombination des Verhältnisses von Taktanzahl des Taktsignals zu Anforderung und/oder Abteilung einer Anzahl von Portionen ist ebenso bevorzugt. Die Einstellbarkeit, ob pro Signal eine Portion, pro Signal mehrere Portionen oder pro mehrere Signale eine Portion erzeugt werden soll, weist den Vorteil auf, dass bei Bedarf Ungenauigkeiten in der Signalfolge (Jitter) ausgeglichen werden können, indem zum Beispiel statt eine Portion pro Signal drei Portionen pro drei Signale eingestellt sind.

Bevorzugt weist die Füllmaschine eine Steuereinheit zum Steuern des kontinuierlichen Förderns des Nahrungsmittelstranges der Füllmaschine unter Verwendung des Portionsanforderungssignals und zum Generieren des Abteilsignals unter Verwendung des Portionsanforderungssignals auf. Eine solche Steuereinheit in der Füllmaschine bietet den Vorteil, dass keine übergeordnete Steuerung erforderlich ist, sondern das System zum Herstellen und Transportieren von Nahrungsmittelportionen vereinfacht werden kann und gleichzeitig die Nachteile der übergeordneten Steuerung vermeidet. Das erfindungsgemäße System ist aus sich heraus synchron, ohne auf eine externe Steuerungseinheit zurückgreifen zu müssen. Es wird so eine besonders einfache und zuverlässige Liniensynchronisierung des erfindungsgemäßen Systems ermöglicht.

Bevorzugt ist die Steuereinheit ausgestaltet, um das Abteilsignal mit dem Portionsanforderungssignal zu synchronisieren. Eine solche Ausgestaltung bietet den Vorteil, dass die Abteilvorrichtung mit der Füllmaschine synchronisiert ist und im laufenden Betrieb ständig synchronisiert gehalten wird.

Bevorzugt ist die Steuereinheit ausgestaltet, um einen Mittelwert aus den Taktlängen des Portionsanforderungssignals zu berechnen, wobei die Steuereinheit auch ausgestaltet ist, um das kontinuierliche Fördern des Nahrungsmittelstranges der Füllmaschine unter Verwendung des Mittelwertes zu steuern und um das Abteilsignal unter Verwendung des Mittelwertes zu generieren. Die Signale bzw. Taktlängen werden bevorzugt algorithmisch verarbeitet (z.B. per Mittelwertsbildung) und als Basis für die Geschwindigkeit des Förderantriebs der Füllmaschine sowie für den Zeitpunkt des Trennsignals (z.B. per Schnitt) der Abteilvorrichtung genutzt. Dadurch wird sowohl eine hohe Genauigkeit durch Fördern mit annähernd konstanter Geschwindigkeit erreicht, als auch eine Anpassung an leichte Schwankungen in der Positionierleistung der Linie ermöglicht. Erfindungsgemäß wird erreicht, dass die Füllmaschine kontinuierlich fördert und die Situation vermieden wird, in der eine Portion mehr oder weniger produziert wird, als das nachfolgende System anfordert.

Bevorzugt ist die Steuereinheit ausgestaltet, um den Betrieb der Füllmaschine und/oder der Abteilvorrichtung zu stoppen, wenn für eine bestimmte Zeit kein Takt empfangen wird. Vorteilhafterweise wird so erreicht, dass ein Produktionsstau bzw. Linienleerlauf vermieden werden kann.

Bevorzugt weist das System ferner einen Füllstromteiler auf. Der Füllstromteiler weist den Vorteil auf, dass der Nahrungsmittelstrang bzw. die Nahrungsmittelportionen vor bzw. nach der Abteilvorrichtung in mehrere parallel und synchron auf der Transporteinrichtung transportierte Nahrungsmittelstränge bzw. Nahrungsmittelportionen aufgeteilt werden kann.

Bevorzugt weist das System ferner die Weiterverarbeitungsvorrichtung auf, die ausgestaltet ist, um die Portionen zu formen und/oder zu verpacken. Andere Weiterverarbeitungsvorrichtungsausgestaltungen, wie zum Beispiel eine Rutschen- oder Bemehlungsvorrichtung, ein Formband, ein Rotary Gate, ein Vorgärband, ein Backblech, ein Gärschrank, ein Ofen oder dergleichen ist ebenso möglich und bevorzugt.

Bevorzugt ist die Füllmaschine eine Vakuumfüllmaschine.

Bevorzugt weist die Abteilvorrichtung ein Messer oder einen Schaber auf. Andere Ausgestaltungen der Abteilvorrichtung sind ebenso bevorzugt.

In einem weiteren Aspekt bezieht sich die Erfindung auf eine Füllmaschine zum kontinuierlichen Fördern eines Nahrungsmittelstranges und zur Verwendung in einem System der Erfindung, wobei die Füllmaschine ausgestaltet ist, um das kontinuierliche Fördern des Nahrungsmittelstranges unter Verwendung eines Portionsanforderungssignals zu steuern.

In einem weiteren Aspekt bezieht sich die Erfindung auf ein Verfahren zum Herstellen und Transportieren von Nahrungsmittelportionen mit den Schritten: Kontinuierliches Fördern eines Nahrungsmittelstranges, Abteilen der Portionen aus dem geförderten Nahrungsmittelstrang, Transportieren der Portionen an eine Weiterverarbeitungsvorrichtung, Generieren eines Portionsanforderungssignals auf Basis einer Portionsanforderung der Weiterverarbeitungsvorrichtung, und Steuern des kontinuierlichen Förderns des Nahrungsmittelstranges unter Verwendung des Portionsanforderungssignals.

Bevorzugt weist das erfindungsgemäße Verfahren ferner die Schritte auf: Generieren eines Abteilsignals unter Verwendung des Portionsanforderungssignals, und Abteilen der Portionen unter Verwendung des Abteilsignals.

Bevorzugt weist das Verfahren ferner den Schritt eines Synchronisierens des Abteilsignals mit dem Portionsanforderungssignal auf.

Bevorzugt weist das erfindungsgemäße Verfahren ferner die Schritte auf: Berechnen eines Mittelwertes aus den Taktlängen des Portionsanforderungssignals, Steuern des kontinuierlichen Förderns des Nahrungsmittelstranges unter Verwendung des Mittelwertes, und Generieren des Abteilsignals unter Verwendung des Mittelwertes.

Bevorzugt weist das Verfahren ferner den Schritt eines Stoppens des kontinuierlichen Förderns und/oder Abteilens auf, wenn für eine bestimmte Zeit kein Takt des Portionsanforderungssignals empfangen wird.

Bevorzugt weist das Verfahren ferner den (die) Schritt(e) eines Formens und/oder Verpackens der Portionen in der Weiterverarbeitungsvorrichtung auf.

Im Folgenden wird die Erfindung anhand von Ausführungsbeispielen erläutert, wobei
- Fig. 1: schematisch das erfindungsgemäße System zeigt;
- Fig. 2: ein Signalschema zwischen dem Master für den Portioniertakt, der Füllmaschine und der Abschneidevorrichtung zeigt;
- Fig. 3: ein Signalschema insbesondere der Steuereinheit der Füllmaschine zeigt;
- Fig. 4: ein Ausführungsbeispiel des erfindungsgemäßen Systems bzw. der erfindungsgemäßen Füllmaschine zeigt;
- Fig. 5: ein konventionelles System zum Herstellen und Transportieren von Nahrungsmittelportionen zeigt.

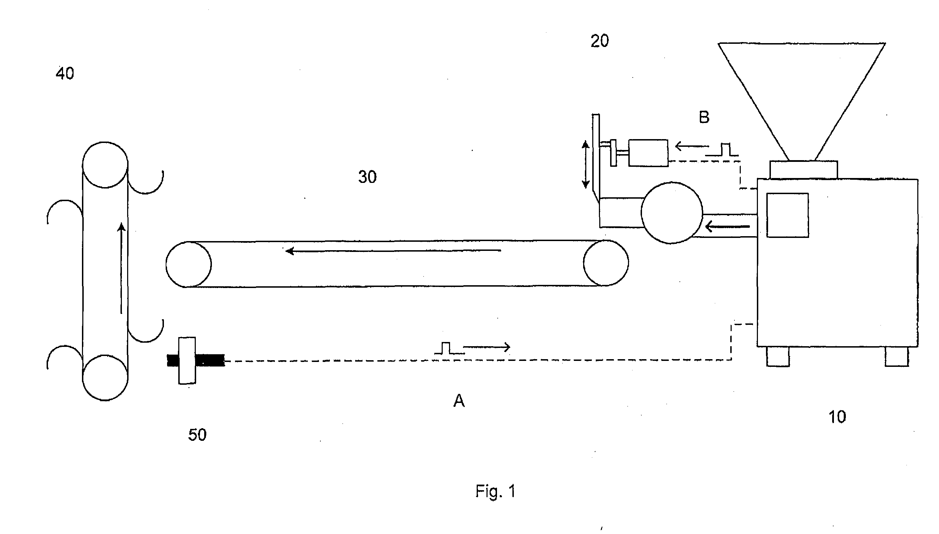

Fig. 1 illustriert schematisch ein erfindungsgemäßes System zum Herstellen und Transportieren von Nahrungsmittelportionen. Das System weist eine Füllmaschine 10 zum kontinuierlichen Fördern eines Nahrungsmittelstranges auf. Das System weist ferner eine Abteilvorrichtung 20 auf, die zum Abteilen der Portionen aus dem geförderten Nahrungsmittelstrang ausgestaltet ist. Das System weist ferner eine Transporteinrichtung 30 zum Transportieren der Portionen an eine Weiterverarbeitungsvorrichtung 40 auf. Die Transporteinrichtung 30 ist bevorzugt ein Förderband. Das erfindungsgemäße System weist ferner eine Sensoreinheit 50 auf, die zum Generieren eines Portionsanforderungssignals A auf Basis einer Portionsanforderung der Weiterverarbeitungsvorrichtung 40 und zum Ausgeben des Portionsanforderungssignals an die Füllmaschine ausgestaltet ist. Die Weiterverarbeitungseinrichtung 40 ist beispielsweise eine Vorrichtung zum Verpacken der einzelnen Portionen.

Um zu erreichen, dass in jede der Verpackungen, die in Fig. 1 schematisch durch Halbkreise an der Weiterverarbeitungsvorrichtung 40 angedeutet sind, gefüllt wird, dient die Weiterverarbeitungsvorrichtung 40 als sogenannter Master zum Generieren des Portionsanforderungssignals. Dabei wird die Synchronisierung zwischen einer leeren Verpackung der Weiterverarbeitungsvorrichtung 40, in die eine Portion mittels des Transportbandes 30 zu füllen ist, und der herantransportierten Portion dadurch erreicht, dass die Sensoreinheit 50 die Position der leeren Verpackung bzw. die Synchronisierung der Portionseinfüllung in eine leere Verpackung misst und auf Basis der Messung das Portionsanforderungssignal A generiert.

Anhand des generierten Portionsanforderungssignals der Sensoreinheit 50, die beispielsweise am Ende der Transporteinrichtung 30 oder an der Weiterverarbeitungsvorrichtung 40 angeordnet ist, wird die Liniensynchronisierung mit der Füllmaschine 10 bzw. der Abteilvorrichtung 20 erreicht. Dabei ist bevorzugt, dass die Sensoreinheit 50 die Übergabe der Portion von der Transporteinrichtung 30 an die Weiterverarbeitungsvorrichtung 40 als Basis zum Generieren des Portionsanforderungssignals A nutzt.

Die Sensoreinheit 50 kann ferner ausgestaltet sein, um das Gewicht und/oder die Größe der Portion, die durch die Transporteinrichtung 30 transportiert ist, zu bestimmen, und eine entsprechende Liniensynchronisierung mit der Füllmaschine 10 bzw. Abteilvorrichtung 20 vorzunehmen. Auf Basis des generierten Portionsanforderungssignals A steuert die Füllmaschine 10 das kontinuierliche Fördern des Nahrungsmittelstranges und erreicht so die erfindungsgemäße Liniensynchronisierung.

Bevorzugt generiert die Füllmaschine 10 auf Basis des Portionsanforderungssignals A das Schneide- bzw. Abteilsignal B, welches zu der Abteilvorrichtung 20 ausgegeben wird. Dadurch, dass das Abteilsignal B auf Basis des Portionsanforderungssignals A in der Füllmaschine 10 generiert wird, wird der Betrieb von der Füllmaschine 10 und der Abteilvorrichtung 20 miteinander synchronisiert, wodurch Schwankungen in Portionsgröße und/oder Gewicht ausgeglichen werden können.

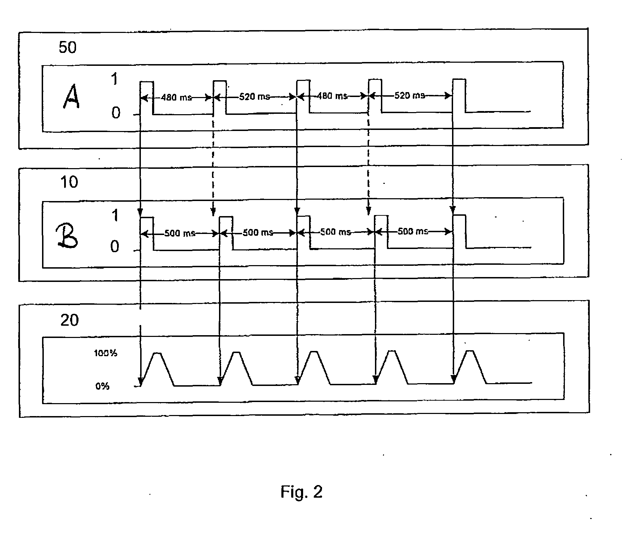

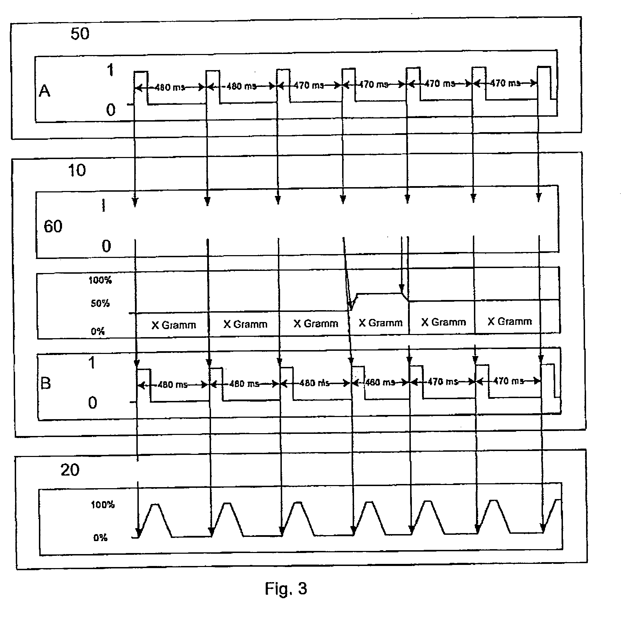

Fig. 2 gibt einen Überblick über die Signale der Sensoreinheit 50, der Füllmaschine 10 und der Abteilvorrichtung 20. Die Signale der Sensoreinheit 50 und der Füllmaschine 10 sind als Rechtecksignale illustriert. Jedwede andere Ausgestaltung von Taktsignalen ist jedoch in gleicher Weise möglich. Zur Vereinfachung der Erläuterung ist das Rechtecksignal in den Fig. 2 und 3 gewählt, um die Frequenz des Arbeitszyklus der erfindungsgemäßen Füllmaschine 10 bzw. der Abteilvorrichtung 20 zu erläutern. Dabei ist der Maximalwert des Takt- bzw. Rechtecksignals mit einer logischen 1 und der Minimalwert mit 0 bezeichnet.

Die Sensoreinheit 50 generiert das Portionsanforderungssignal A, welches als Master für den Portioniertakt dient. Der Master wird somit erfindungsgemäß durch die Sensoreinheit 50 bzw. die Weiterverarbeitungsvorrichtung 40 an der Linie vorgegeben. Wie in Fig. 2 zu erkennen ist, kann der Takt bzw. die Taktlänge des Portionsanforderungssignals A schwanken. Eine solche Schwankung bzw. Veränderung des Taktes des Portionsanforderungssignals kann unbeabsichtigt, beispielsweise durch Leistungsschwankungen im Stromnetz, oder beabsichtigt, beispielsweise durch Portionsgröße bzw. Gewichtsumstellung, verursacht sein.

Die Füllmaschine 10 empfängt das Portionsanforderungssignal A der Sensoreinheit 50 und generiert das Schneidesignal B, wie in Fig. 2 dargestellt ist. In Fig. 2 ist zu erkennen, wie die Füllmaschine 10 bzw. deren Steuereinheit 60 die Schwankung bzw. Veränderung im Portionsanforderungssignal A ausgleicht: Aus den schwankenden bzw. sich verändernden Taktlängen von 480 ms und 520 ms des Portionsanforderungssignals A wird ein Mittelwert berechnet und dieser berechnete Signaltakt als Schneidesignal B an die Abschneidevorrichtung 20 ausgegeben.

Das Signal der Abschneidevorrichtung 20 in Fig. 2 illustriert den Messerantrieb, der zwischen 0% bis 100% variierbar ist, um den Nahrungsmittelstrang in einzelne Portionen zu teilen. Der Messerantrieb wird durch den Takt bzw. die Taktlänge des Schneidesignals B bestimmt, d.h. bei jeder aufsteigenden Flanke des Schneidetaktsignals B wird der Messerantrieb von 0% auf 100% betrieben, um einen Abteilvorgang zum Abteilen einer Portion aus dem Nahrungsmittelstrang vorzunehmen. Eine Synchronisierung von Portionsanforderungssignal A, Schneidesignal B und Messerantrieb wird so erfindungsgemäß erreicht, wodurch eine Liniensynchronisierung bewirkt wird, die Portionsgrößen bzw. Gewichtsschwankungen weitgehend vermeidet.

Fig. 3 zeigt ein weiteres Signalschema, in dem der Steuerungsbetrieb innerhalb der Füllmaschine 10 detaillierter dargestellt ist. Die Sensoreinheit 50 gibt den Master für den Portioniertakt in Form des Portionieranforderungssignals A an. Das Portionsanforderungssignal A weist bevorzugt einen logischen 0-Wert (inaktiv) und einen logischen 1-Wert (aktiv) auf. In Fig. 3 ist der Fall dargestellt, dass sich der Takt des Portionsanforderungssignals A von 480 ms auf 470 ms verkürzt, d.h. es findet eine Tempoänderung des Portionsanforderungssignals A statt.

Die Füllmaschine 10 bzw. die Steuerungseinheit 60 empfängt das Portionsanforderungssignal A als Input I. Das Steuerungsmodul 60 detektiert zunächst eine Taktlänge von 480 ms bis die Tempoänderung auf 470 ms auftritt. Bei Detektierung der Tempoänderung führt die Steuerungseinheit 60 eine Änderungsverarbeitung durch, um Füllmaschine 10 und Abschneidevorrichtung 20 zu dem im Tempo geänderten Portionsanforderungssignal A zu synchronisieren. Dazu gibt Steuerungsmodul 60 an Output O geänderte Signale aus, die den Förderwerksantrieb (mittlerer Signalverlauf der schematischen Füllmaschine 10 der Fig. 3) und das Schneidesignal B an das im Tempo geänderte Portionsanforderungssignal A anpassen.

Der Förderwerksantrieb ist zwischen 0% bis 100% variierbar. Der Füllmaschine 10 ist vorgegeben, dass eine Portion ein Gewicht von X Gramm aufweisen soll. Der Förderwerksantrieb wird so angesteuert, dass innerhalb der Taktlänge des Portionsanforderungssignals A X Gramm des Nahrungsmittelstranges aus der Füllmaschine 10 ausgebracht werden, um von der Abschneidevorrichtung 20 in eine X Gramm schwere Portion abgeteilt zu werden. Wird das Tempo des Portionsanforderungssignals gesenkt, wie im Beispiel der Fig. 3 gezeigt ist, erhält der Förderwerksantrieb von der Steuerungseinheit 60 das Signal, seine Leistung entsprechend zu erhöhen, um in der kürzeren Zeit von 470 ms weiterhin die vorgegebene Gewichtsgröße von X Gramm zu fördern. In Fig. 3 ist die Portionsmenge schematisch durch die Fläche des schraffierten Feldes repräsentiert. Das Steuerungsmodul 60 steuert den Förderwerksantrieb so, dass ein Übergangszyklus genutzt wird, um nach der Tempoänderung von 480 auf 470 ms eine Änderungsverarbeitung durchzuführen und die Förderleistung der Füllmaschine 10 auf das neue Tempo anzupassen.

Mittels der Änderungsverarbeitung ist der Ausstoß (das Förderwerkstempo) eine Portion lang höher als für den neuen Portioniertakt, damit auch die Portion in der Anpassungsphase möglichst gut ist. Nach diesem Vorgang ist erfindungsgemäß das Portionsanforderungssignal A und das Schneidesignal B wieder synchron zueinander. Dies ist ein einfaches Beispiel einer Tempoänderung, bei dem jedes Signal einer Portion entspricht. Auch ist es möglich, dass das Verhältnis von Signal zu Portion anders gewählt wird, so dass z.B. bei einer Einstellung von "2/2" jede zweite Portionsanforderung ignoriert wird und das entsprechende Schneidesignal als Mitte zwischen den anderen berechnet wird. Auch können die Signale nicht nur von der Portionsanzahl, sondern von der "Toleranz" sowie anderer Parameter und Algorithmen abhängig sein.

Wie bereits unter Bezugnahme auf Fig. 2 erläutert, wird das Schneidesignal B mit dem Portionsanforderungssignal A synchronisiert, indem es auf Basis des Portionsanforderungssignals A generiert wird. Das heißt, Schwankungen oder Veränderungen des Portionsanforderungssignals A werden unmittelbar in einen geänderten Takt bzw. Taktlänge des Schneidesignals B umgesetzt. In dem Beispiel der Fig. 3 geschieht dies durch einen besonders kurzen Übergangstakt von 460 ms, um das Schneidesignal B möglichst rasch mit dem Portionsanforderungssignal A zu synchronisieren.

Die Abschneidevorrichtung 20 schneidet auf Basis des Schneidesignals B Portionen aus dem Nahrungsmittelstrang, indem der Messerantrieb zwischen 0% bis 100% veränderbar ist. Wie in Fig. 3 dargestellt ist, erfolgte die Ansteuerung des Messerantriebs von 0% auf 100% in Antwort auf die steigende Flanke des Schneidesignals B.

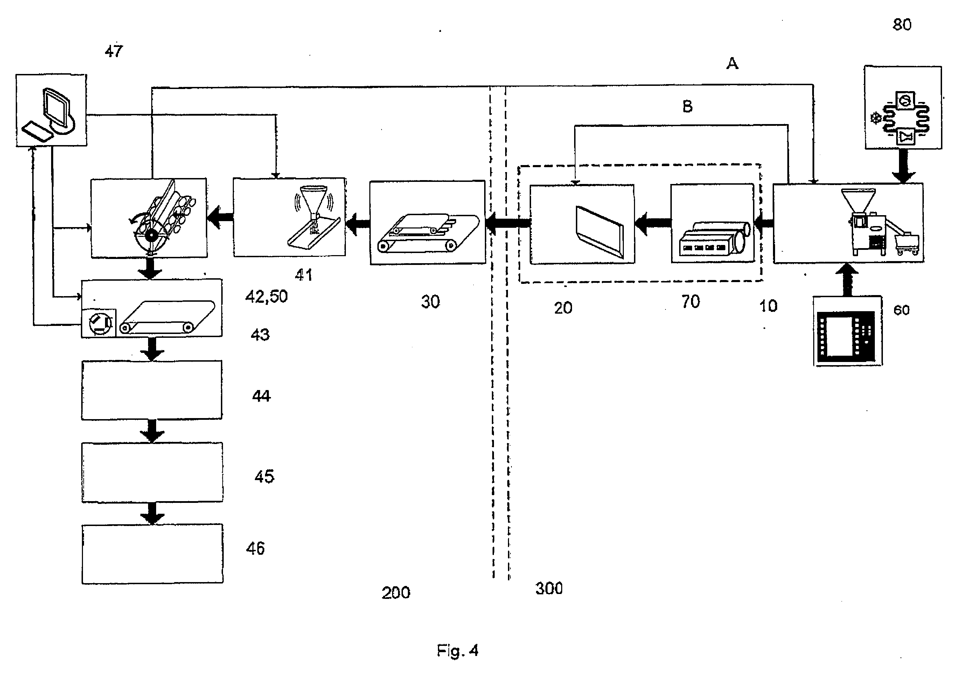

In Fig. 4 ist eine Ausführungsform einer Verwendung des erfindungsgemäßen Systems illustriert. Dabei unterteilt sich die Produktionslinie der Fig. 4 in einen Masterteil 200 und einen Slaveteil 300. Der Masterteil 200 entspricht im Wesentlichen einem konventionellen System, wie es unter Bezugnahme auf Fig. 5 bereits erläutert ist. Die Slaveeinheit 300 weist die erfindungsgemäße Füllmaschine 10 auf. Der Betrieb der erfindungsgemäßen Füllmaschine 10 des Slaveteils 300 in Verbindung mit der Mastereinheit 200 erfolgt gemäß einer bevorzugten Ausführungsform wie folgt.

Die erfindungsgemäße Füllmaschine 10 weist eine Steuereinheit 60 auf. Die Steuereinheit 60 ist bevorzugt als Grafik-PC ausgestaltet. Die Füllmaschine 10 weist ferner bevorzugt eine Kühlung 80 auf, die den Nahrungsmittelstrang bzw. die Nahrungsmittelmasse, aus der der Nahrungsmittelstrang geformt wird, auf einer entsprechenden Temperatur hält. Der Nahrungsmittelstrang wird von der Füllmaschine 10 an einen Füllstromteiler (sogenanntes "Water Wheel") 70 ausgegeben, der den Nahrungsmittelstrang in mehrere Nahrungsmittelstränge aufteilt. Die Nahrungsmittelstränge des Füllstromteilers 70 werden an die Abschneidevorrichtung 20 ausgegeben. Die Abschneidevorrichtung 20 teilt die Nahrungsmittelstränge in Portionen und gibt diese an die Transporteinrichtung bzw. das Formband 30 aus. Von dem Formband 30 werden die Nahrungsmittelstränge an die Rutschen- bzw. Bemehlungsvorrichtung 41 ausgegeben, und von dieser an das Rotary Gate 42 weitergeleitet. Das Rotary Gate 42 übergibt die Teiglinge an ein Vorgärband 43, von wo sie auf einem Backblech 44 abgelegt, an einen Gärschrank 45 und einen Ofen 46 weitergeleitet werden.

Die Mastereinheit 200 kann optional eine übergeordnete Steuerung 47 aufweisen, wie sie bereits unter Bezugnahme auf Fig. 5 erläutert ist. Der Betrieb der erfindungsgemäßen Füllmaschine 10 ist der folgende: Das Rotary Gate 42 ist ein Ausführungsbeispiel einer Weiterverarbeitungsvorrichtung 40. Das Rotary Gate 42 weist Ausnehmungen auf, in die die Teiglinge aufgenommen werden. In gleicher Weise könnte das Rotary Gate 42 beispielsweise der Formung oder Verpackung der Teiglinge dienen. Das Rotary Gate 42 weist die Sensoreinheit 50 auf, die beispielsweise das Taktsignal an der Welle des Rotary Gates 42 abnimmt, um das Portionsanforderungssignal A zu generieren. Das Portionsanforderungssignal A wird von dem Rotary Gate 42 bzw. der Sensoreinheit 50 an die Füllmaschine 10 ausgegeben. Die Steuereinheit 60 der Füllmaschine 10 generiert auf Basis des Portionsanforderungssignals A das Abschneidesignal B und gibt dieses an die Abschneidevorrichtung 20 aus. Auf diese Weise wird eine Liniensynchronisierung von Füllmaschine 10 und Abschneidevorrichtung 20 mit der Weiterverarbeitungsvorrichtung 40 erfindungsgemäß erreicht.

Um sich wiederholende Taktabweichungen des Mastersignaltakts (Portionsanforderungssignal A) auszugleichen, kann das erfindungsgemäße System angewiesen werden, nur auf jeden zweiten oder dritten Signaltakt zu achten, indem ein sogenannter "2/2"- oder "3/3"-Modus eingestellt wird. Die ignorierten Takte werden durch errechnete (Jitter-freie) Signale ersetzt. Der Algorithmus benutzt bevorzugt zwei unterschiedliche Methoden für die Synchronisierung: Eine mit sehr geringer Geschwindigkeitsänderung und eine mit einem vorübergehenden Sprung in eine wesentlich höhere oder niedrige Geschwindigkeit. Bevorzugt wird die geringe Geschwindigkeitsänderung benutzt. Wenn jedoch der Versatz zwischen externen Signaltakt (Signal A) und dem Schneidesignal (B) größer als die eingestellte "Toleranz" ist, wird der Geschwindigkeitssprung genutzt. Bei der Eingabe eines Wertes für die "Toleranz", wird diese abhängig von der aktuellen Portionsdauer begrenzt.

Eine Option "Timeout" der Steuerungseinheit 60 legt bevorzugt fest, wie viele externe Signaltakte des Portionsanforderungssignals A fehlen dürfen, bevor die Füllmaschine 10 gestoppt wird.

Bevorzugt analysiert die Steuereinheit 60 bzw. die Füllmaschine 10 bei der Inbetriebnahme einer Linie eine vorbestimmte Zeit lang den externen Signaltakt des Signals A, bevor der Betrieb des erfindungsgemäßen Systems bzw. der Füllmaschine 10 startet. Während dieser Analyse werden das Tempo der Füllmaschine 10 und die Portionen pro Signale angepasst.

## Patentansprüche

1. System zum Herstellen und Transportieren von Nahrungsmittelportionen mit einer Füllmaschine (10) zum kontinuierlichen Fördern eines Nahrungsmittelstranges, einer Abteilvorrichtung (20) zum Abteilen der Portionen aus dem geförderten Nahrungsmittelstrang,
einer Transporteinrichtung (30) zum Transportieren der Portionen an eine Weiterverarbeitungsvorrichtung (40), und
einer Weiterverarbeitungsvorrichtung (40),
**gekennzeichnet durch** eine Sensoreinheit (50) zum Generieren eines Portionsanforderungssignales (A) auf Basis einer Portionsanforderung der Weiterverarbeitungsvorrichtung (40) und zum Ausgeben des Portionsanforderungssignales (A) an die Füllmaschine (10),
wobei die Füllmaschine (10) ausgestaltet ist, um das kontinuierliche Fördern des Nahrungsmittelstranges unter Verwendung des Portionsanforderungssignals (A) zu steuern.

2. System nach Anspruch 1, wobei die Füllmaschine (10) ferner ausgestaltet ist, um ein Abteilsignal (B) unter Verwendung des Portionsanforderungssignales (A) zu generieren und um das Abteilsignal (B) an die Abteilvorrichtung (20) auszugeben, und wobei die Abteilvorrichtung (20) ausgestaltet ist, um die Portionen unter Verwendung des Abteilsignals (B) abzuteilen.

3. System nach Anspruch 1 oder 2, wobei das Portionsanforderungssignal (A) und/oder Abteilsignal (B) ein Taktsignal ist.

4. System nach Anspruch 3, wobei ein Takt des Taktsignales die Anforderung und/oder Abteilung einer Portion repräsentiert.

5. System nach Anspruch 3, wobei ein Takt des Taktsignales die Anforderung und/oder Abteilung von zwei Portionen repräsentiert.

6. System nach Anspruch 3, wobei zwei Takte des Taktsignales die Anforderung und/oder Abteilung einer Portion repräsentieren.

7. System nach einem der vorstehenden Ansprüche, wobei die Füllmaschine (10) eine Steuereinheit (60) zum Steuern des kontinuierlichen Förderns des Nahrungsmittelstranges der Füllmaschine (10) unter Verwendung des Portionsanforderungssignals (A) und zum Generieren des Abteilsignales (B) unter Verwendung des Portionsanforderungssignales (A) aufweist.

8. System nach einem der vorstehenden Ansprüche, wobei die Steuereinheit (60) ausgestaltet ist, um das Abteilsignal (B) mit dem Portionsanforderungssignal (A) zu synchronisieren.

9. System nach einem der vorstehenden Ansprüche, wobei die Steuereinheit (60) ausgestaltet ist, um einen Mittelwert aus den Taktlängen des Portionsanforderungssignales (A) zu berechnen, und wobei die Steuereinheit (60) ausgestaltet ist, um das kontinuierliche Fördern des Nahrungsmittelstranges der Füllmaschine (40) unter Verwendung des Mittelwertes zu steuern und um das Abteilsignal (B) unter Verwendung des Mittelwertes zu generieren.

10. System nach einem der vorstehenden Anspruche, wobei die Steuereinheit (60) ausgestaltet ist, um den Betrieb der Füllmaschine (10) und/oder der Abteilvorrichtung (20) zu stoppen, wenn für eine bestimmte Zeit kein Takt empfangen wird.

11. Verfahren zum Herstellen und Transportieren von Nahrungsmittelportionen mit den Schritten
kontinuierliches Fördern eines Nahrungsmittelstranges mittels einer Füllmaschine (10), Abteilen der Portionen aus dem geförderten Nahrungsmittelstrang,
Transportieren der Portionen an eine Weiterverarbeitungsvorrichtung (40), **gekennzeichnet durch** die nachfolgenden Schritte:
Generieren eines Portionsanforderungssignales (A) auf Basis einer Portionsanforderung der Weiterverarbeitungsvorrichtung (40), und
Steuern des kontinuierlichen Förderns des Nahrungsmittelstranges der Füllmaschine (10) unter Verwendung des Portionsanforderungssignals (A).

12. Verfahren nach Anspruch 11, wobei das Verfahren ferner die Schritte aufweist:
Generieren eines Abteilsignals (B) unter Verwendung des Portionsanforderungssignales (A), und
Abteilen der Portionen unter Verwendung des Abteilsignals (B).

13. Verfahren nach Anspruch 13 oder 12, wobei das Verfahren ferner den Schritt aufweist:
Synchronisieren des Abteilsignals (B) mit dem Portionsanforderungssignal (A).

14. Verfahren nach einem der Ansprüche 11 bis 13, wobei das Verfahren ferner die Schritte aufweist:
Berechnen eines Mittelwert aus den Taktlängen des Portionsanforderungssignales (A),
Steuern des kontinuierlichen Förderns des Nahrungsmittelstranges unter Verwendung des Mittelwertes, und
Generieren des Abteilsignals (B) unter Verwendung des Mittelwertes.

## Claims

1. System for producing and transporting food product portions having
a filling machine (10) for continuously conveying a food product strand, a dividing device (20) for dividing the portions from the conveyed food product strand,
a transport device (30) for transporting the portions to a further processing device (40) and a further processing device (40),
**characterised by** a sensor unit (50) for generating a portion request signal (A) on the basis of a portion request of the further processing device (40) and for outputting the portion request signal (A) to the filling machine (10),
wherein the filling machine (10) is constructed to control the continuous conveying of the food product strand using the portion request signal (A).

2. System according to claim 1, wherein the filling machine (10) is further constructed to generate a dividing signal (B) using the portion request signal (A) and to output the dividing signal (B) to the dividing device (20), and wherein the dividing device (20) is constructed to divide the portions using the dividing signal (B).

3. System according to claim 1 or 2, wherein the portion request signal (A) and/or dividing signal (B) is a phase signal.

4. System according to claim 3, wherein a phase of the phase signal represents the request for and/or division of a portion.

5. System according to claim 3, wherein a phase of the phase signal represents the request for and/or division of two portions.

6. System according to claim 3, wherein two phases of the phase signal represent the request for and/or division of a portion.

7. System according to any one of the preceding claims, wherein the filling machine (10) has a control unit (6) for controlling the continuous conveying of the food product strand to the filling machine (10) using the portion request signal (A) and for generating the dividing signal (B) using the portion request signal (A).

8. System according to any one of the preceding claims, wherein the control unit (60) is constructed to synchronise the dividing signal (B) with the portion request signal (A).

9. System according to any one of the preceding claims, wherein the control unit (60) is constructed to calculate a mean value from the phase lengths of the portion request signal (A), and wherein the control unit (60) is constructed to control the continuous conveying of the food product strand to the filling machine (40) using the mean value and to generate the dividing signal (B) using the mean value.

10. System according to any one of the preceding claims, wherein the control unit (60) is constructed to stop the operation of the filling machine (10) and/or the dividing device (20) if no phase is received for a specific time.

11. Method for producing and transporting food product portions with the steps of
continuously conveying a food product strand by means of a filling machine (10),
dividing the portions from the conveyed food product strand,
transporting the portions to a further processing device (40) **characterised by** the following steps:
generating a portion request signal (A) on the basis of a portion request of the further processing device (40) and
controlling the continuous conveying of the food product strand to the filling machine (10) using the portion request signal (A).

12. Method according to claim 11, wherein the method further has the steps of:
generating a dividing signal (B) using the portion request signal (A) and
dividing the portions using the dividing signal (B).

13. Method according to claim 11 or 12, wherein the method further has the step of:
synchronising the dividing signal (B) with the portion request signal (A).

14. Method according to any one of claims 11 to 13, wherein the method further has the steps of:
calculating a mean value from the phase lengths of the portion request signal (A),
controlling the continuous conveying of the food product strand using the mean value and
generating the dividing signal (B) using the mean value.

## Revendications

1. Système servant à produire et à transporter des portions de denrées alimentaires, comprenant une machine de remplissage (10) servant à convoyer en continu une ligne de denrées alimentaires, un dispositif de séparation (20) servant à séparer les portions de la ligne de denrées alimentaires convoyée,
un système de transport (30) servant à transporter les portions à un dispositif de transformation ultérieure (40), et
un dispositif de transformation ultérieure (40),
**caractérisé par** une unité de capteur (50) servant à générer un signal de demande de portion (A) d'après une demande de portion du dispositif de transformation ultérieure (40) et servant à émettre le signal de demande de portion (A) à l'attention de la machine de remplissage (10),
sachant que la machine de remplissage (10) est configurée pour commander le convoyage continu de la ligne de denrées alimentaires en utilisant le signal de demande de portion (A).

2. Système selon la revendication 1, sachant que la machine de remplissage (10) est en outre configurée pour générer un signal de séparation (B) en utilisant le signal de demande de portion (A) et pour émettre le signal de séparation (B) à l'attention du dispositif de séparation (20), et sachant que le dispositif de séparation (20) est configuré pour séparer les portions en utilisant le signal de séparation (B).

3. Système selon la revendication 1 ou 2, sachant que le signal de demande de portion (A) et/ou le signal de séparation (B) sont/est un signal de synchronisation.

4. Système selon la revendication 3, sachant qu'une cadence du signal de synchronisation représente la demande et/ou la séparation d'une portion.

5. Système selon la revendication 3, sachant qu'une cadence du signal de synchronisation représente la demande et/ou la séparation de deux portions.

6. Système selon la revendication 3, sachant que deux cadences du signal de synchronisation représentent la demande et/ou la séparation d'une portion.

7. Système selon l'une quelconque des revendications précédentes, sachant que la machine de remplissage (10) présente une unité de commande (60) servant à commander le convoyage continu de la ligne de denrées alimentaires de la machine de remplissage (10) en utilisant le signal de demande de portion (A) et servant à générer le signal de séparation (B) en utilisant le signal de demande de portion (A).

8. Système selon l'une quelconque des revendications précédentes, sachant que l'unité de commande (60) est configurée pour synchroniser le signal de séparation (B) sur le signal de demande de portion (A).

9. Système selon l'une quelconque des revendications précédentes, sachant que l'unité de commande (60) est configurée pour calculer une valeur moyenne à partir des longueurs de cadence du signal de demande de portion (A), et sachant que l'unité de commande (60) est configurée pour commander le convoyage continu de la ligne de denrées alimentaires de la machine de remplissage (40) en utilisant la valeur moyenne et pour générer le signal de séparation (B) en utilisant la valeur moyenne.

10. Système selon l'une quelconque des revendications précédentes, sachant que l'unité de commande (60) est configurée pour arrêter le fonctionnement de la machine de remplissage (10) et/ou du dispositif de séparation (20) en l'absence de la réception d'une cadence pour une durée définie.

11. Procédé servant à produire et à transporter des portions de denrées alimentaires, comprenant les étapes consistant à :
convoyer en continu une ligne de denrées alimentaires au moyen d'une machine de remplissage (10) ;
séparer les portions de la ligne de denrées alimentaires convoyée ;
transporter les portions à un dispositif de transformation ultérieure (40) ;
**caractérisé par** les étapes qui suivent consistant à :
générer un signal de demande de portion (A) d'après une demande de portion du dispositif de transformation ultérieure (40), et
commander le convoyage continu de la ligne de denrées alimentaires de la machine de remplissage (10) en utilisant le signal de demande de portion (A).

12. Procédé selon la revendication 11, sachant que le procédé présente en outre les étapes consistant à :
générer un signal de séparation (B) en utilisant le signal de demande de portion (A), et
séparer les portions en utilisant le signal de séparation (B).

13. Procédé selon la revendication 11 ou 12, sachant que le procédé présente en outre l'étape consistant à :
synchroniser le signal de séparation (B) sur le signal de demande de portion (A).

14. Procédé selon l'une quelconque des revendications 11 à 13, sachant que le procédé présente en outre les étapes consistant à :
calculer une valeur moyenne à partir des longueurs de cadence du signal de demande de portion (A) ;
commander le convoyage continu de la ligne de denrées alimentaires en utilisant la valeur moyenne ; et
générer le signal de séparation (B) en utilisant la valeur moyenne.
